# EUROPÄISCHE PATENTSCHRIFT

(11) **EP 1 233 200 B1**
(45) Veröffentlichungstag und Bekanntmachung des Hinweises auf die Patenterteilung: **25.01.2006**
(21) Anmeldenummer: 02003750.3
(22) Anmeldetag: 19.02.2002
(51) Int. Cl.: F16C 33/66, F16H 25/22, F16H 57/04

(54) **Drehlager mit Schmierkanalanordnung, Gewindetrieb mit drehgelagerter Gewindemutter**
Pivot bearing with lubricating duct arrangement, screw drive with rotatably mounted nut
Palier intégrant un canal de lubrification, guidage fileté avec écrou rotatif

(30) Priorität: 19.02.2001 DE 10107706
(43) Veröffentlichungstag der Anmeldung: 21.08.2002
(73) Patentinhaber: Rexroth Star GmbH, 97424 Schweinfurt (DE)
(72) Erfinder: Greubel, Roland, 97729 Ramsthal (DE)
(74) Vertreter: Herzog, Markus

(56) Entgegenhaltungen:
- EP-A- 0 930 214
- DE-A- 4 142 983
- DE-A- 19 519 770
- PATENT ABSTRACTS OF JAPAN Bd. 1998, Nr. 12, 31. Oktober 1998 (1998-10-31) & JP 10 184683 A (THK KK), 14. Juli 1998 (1998-07-14)

## Beschreibung

Die Erfindung betrifft ein Drehlager mit einer Schmierkanalanordnung zum Zuführen von Schmiermittel sowohl zu den Eingriffsflächen eines radial inneren Lagerteils und eines radial äußeren Lagerteils des Drehlagers als auch zu wenigstens einer weiteren Schmierstelle, wobei der radial innere Lagerteil und der radial äußere Lagerteil um eine Achse des Drehlagers relativ zueinander verdrehbar sind, und wobei die Schmierkanalanordnung wenigstens einen ersten Schmierkanal umfasst, dessen eines Ende in die Innenumfangsfläche des radial äußeren Lagerteils mündet und dessen anderes Ende mit einer Schmiermittel-Zufuhr verbindbar ist, ferner wenigstens einen zweiten Schmierkanal, der von der Außenumfangsfläche des radial inneren Lagerteils zu dessen Innenumfangsfläche führt, und schließlich einen Ringraum umfasst, der zwischen der Innenumfangsfläche des äußeren Lagerteils und der Außenumfangsfläche des inneren Lagerteils gebildet ist, wobei sowohl der wenigstens eine erste Schmierkanal als auch der wenigstens eine zweite Schmierkanal in den Ringraum münden.

Ein derartiges Drehlager ist beispielsweise aus der DE 195 19 770 A1 bekannt.

Die Gewindespindel eines Wälzkörpergerwindetriebs für einen Maschinentisch wird üblicherweise im Maschinenbett drehbar gelagert, wobei die Gewindemutter fest mit dem Maschinentisch verbunden ist. Soll der Maschinentisch also mit einer hohen Geschwindigkeit längs der Gewindespindel verfahren werden, so ist hierfür eine entsprechend hohe Drehzahl der Gewindespindel um ihre Achse erforderlich. Die Spindeldrehzahl und somit auch die Verfahrgeschwindigkeit des Maschinentischs sind aber durch die biegekritische Drehzahl der Gewindespindel nach oben begrenzt. Aus diesem Grund wählt man bei hohen Maschinentisch-Verfahrgeschwindigkeiten häufig einen Aufbau mit fest angeordneter Gewindespindel und drehbar gelagerter Gewindemutter, wie er beispielsweise aus der DE 195 19 770 A1 bekannt ist.

Bei den in dieser Druckschrift offenbarten Ausführungsformen ist das radial äußere Lagerteil des Drehlagers als vom Maschinentisch gesondertes, mit diesem fest verbindbares Bauelement ausgebildet, und des weiteren sind an einer radial inneren Umfangsfläche des radial inneren Lagerteils die Gewindegänge der Gewindemutter des Gewindetriebs vorgesehen, d.h. das radial innere Lagerteil und die Gewindemutter sind einstückig ausgebildet. Wie man leicht einsieht, ist für einen ordnungsgemäßen Betrieb des aus der DE 195 19 770 A 1 bekannten Gewindetriebs sowohl eine Schmierung der Eingriffsflächen zwischen dem radial äußeren und dem radial inneren Lagerteil erforderlich, als auch eine Schmierung der Eingriffsflächen zwischen der Gewindespindel und der Gewindemutter.

Um die Schmierung zentral von einem, zumindest was eine rotatorische Bewegung anbelangt, feststehenden Bauelement aus vornehmen zu können, verfügen die aus der DE 195 19 770 A1 bekannten Ausführungsformen über eine Schmierkanalanordnung mit einer zentralen Schmiermittel-Zuführstelle. Von dieser zentralen Schmiermittel-Zuführstelle geht ein erster Schmierkanal aus, dessen eines Ende an der Innenumfangsfläche des radial äußeren Lagerteils in einem Ringraum endet. Dieser Ringraum ist zwischen dem radial äußeren und dem radial inneren Lagerteil angeordnet und kann somit in einfacher Weise die Eingriffsflächen der beiden Lagerteile mit Schmiermittel versorgen. Zur Versorgung einer weiteren Schmierstelle, nämlich den Eingriffsflächen zwischen der Gewindemutter und der Gewindespindel, ist ein zweiter Schmierkanal vorgesehen, der das innere Lagerteil von dessen Außenumfangsfläche zu dessen Innenumfangsfläche durchsetzt. Vom radial inneren Ende dieses zweiten Schmierkanals kann das Schmiermittel in einfacher Weise zu den Eingriffsflächen zwischen Gewindemutter und Gewindespindel gelangen.

Um die Schmiermittel-Verteilung zwischen der Schmierung der Eingriffsflächen des Drehlagers und der Schmierung der Eingriffsflächen zwischen Gewindespindel und Gewindemutter beeinflussen zu können, sind bei den Ausführungsformen gemäß Fig. 10, 11 und 12 der DE 195 19 770 A1 Drosselansätze an der Innenumfangsfläche des radial äußeren Lagerteils oder/und der Außenumfangsfläche des radial inneren Lagerteils angeformt. Es müssen daher je nach Beschaffenheit des einzusetzenden Schmierstoffs (Schmierfett bzw. Schmieröl unterschiedlicher Viskosität) unterschiedlich ausgebildete innere bzw. äußere Lagerteile bereitgestellt werden. Dies schränkt die Einsatzmöglichkeiten des einzelnen Drehlagers bzw. einzelnen Gewindetriebs mit drehgelagerter Gewindemutter erheblich ein bzw. erfordert die Bereitstellung einer Vielzahl derartiger Drehlager bzw. Gewindetriebe mit drehgelagerter Gewindemutter.

Demgegenüber ist es Aufgabe der Erfindung, ein Drehlager, insbesondere für einen Gewindetrieb mit drehgelagerter Gewindemutter, bereitzustellen, der eine in hohem Maße flexible Anpassung des Drehlagers bzw. des Gewindetriebs an die jeweiligen Einsatzbedingungen, insbesondere die Eigenschaften des einzusetzenden Schmierstoffs, erlaubt.

Erfindungsgemäß wird diese Aufgabe durch ein Drehlager der eingangs genannten Art gelöst, bei welchem in dem Ringraum ein als gesondertes Bauteil ausgebildetes Schmiermittel-Verteilelement angeordnet ist, welches mit dem wenigstens einen ersten Schmierkanal in Schmiermittel-Zufuhrverbindung steht, wobei in oder/und an dem Schmiermittel-Verteilelement wenigstens ein erster Abführweg vorgesehen ist, um den Eingriffsflächen des Drehlagers Schmiermittel zuzuführen, und wobei in oder/und an dem Schmiermittel-Verteilelement ferner wenigstens ein zweiter Abführweg vorgesehen ist, um über den wenigstens einen zweiten Schmierkanal der wenigstens einen weiteren Schmierstelle Schmiermittel zuzuführen. Erfindungsgemäß können also das radial innere und das radial äußere Lagerteil als Standardbauelemente ausgebildet sein. Sie brauchen lediglich miteinander einen Ringraum zu begrenzen, in dem das als gesondertes Bauteil ausgebildete Schmiermittel-Verteilelement angeordnet werden kann.

Das Schmiermittel-Verteilelement definiert Schmiermittel-Abführwege, deren Durchtrittswiderstand für das Schmiermittel in Abhängigkeit der gewünschten Schmiermittel-Verteilung gewählt werden kann. In Anpassung an die jeweiligen Einsatzbedingungen, insbesondere das jeweils einzusetzende Schmiermittel, braucht daher erfindungsgemäß lediglich das jeweils passende Schmiermittel-Verteilelement in dem Ringraum des Standard-Drehlagers angeordnet zu werden.

Wenn vorstehend davon die Rede war, dass das Schmiermittel-Verteilelement Abführwege "definiert", so ist damit erfindungsgemäß sowohl gemeint, dass diese Abführwege einzig und allein von dem Schmiermittel-Verteilelement gebildet sind, insbesondere an diesem ausgebildet sind, beispielsweise in Form von Abführbohrungen, deren Durchmesser den Schmiermittel-Durchfluss drosselt. Alternativ kann die die Schmiermittel-Verteilung steuerende Drosselwirkung aber auch von Abführwegen bereitgestellt werden, die zwischen dem Schmiermittel-Verteilelement und den dieses umgebenden Wandungsflächen, insbesondere des Ringraums, gebildet sind. Schließlich ist es auch möglich, dass lediglich einer der Abführwege auf eine der vorstehend beschriebenen Weisen drosselnd ausgebildet ist, während der andere Abführweg dem SchmiermittelDurchfluss keinen Drosselwiderstand entgegensetzt, sondern das Schmiermittel zu einem in einem der Lagerteile des Drehlagers ausgebildeten drosselnden Schmierkanal weiterleitet.

Wenn vorstehend bzw. nachfolgend beispielsweise die Begriffe Schmierkanal oder Abführweg in der Einzahl verwendet werden, so ist dies nicht als den Schutzumfang der Ansprüche einschränkend auszulegen, sondern dient vielmehr lediglich der sprachlichen Vereinfachung. Insbesondere den sich um die Achse drehenden Bauteilen kann eine Mehrzahl von jeweiligen Typen von Schmierkanälen bzw. Abführwegen und dergleichen zugeordnet sein, um eine kontinuierliche Schmiermittel-Zufuhr gewährleisten zu können.

Das Schmiermittel-Verteilelement kann beispielsweise als Kunststoffteil, insbesondere als Spritzgussteil, hergestellt sein.

In einer bevorzugten Ausführungsform kann das Schmiermittel-Verteilelement einen im Wesentlichen U-förmigen Querschnitt aufweisen mit zwei Seitenschenkeln und einem diese verbindenden Quersteg, wobei beispielsweise in dem Quersteg wenigstens eine Zuführöffnung vorgesehen sein kann, durch welche Schmiermittel von dem wenigstens einen ersten Schmierkanal in den von dem Quersteg und den beiden Seitenschenkeln der U-Form umgrenzten Innenraum des Schmiermittel-Verteilelements zuführbar ist.

Wie vorstehend bereits angedeutet, kann der erste Abführweg zumindest teilweise zwischen einer im Wesentlichen orthogonal zur Achsrichtung verlaufenden Außenfläche des Schmiermittel-Verteilelements und einer ebenfalls im Wesentlichen orthogonal zur Achsrichtung verlaufenden Gegenfläche des Ringraums ausgebildet sein. Diese Weiterbildung bietet sich insbesondere an, wenn der Ringraum als Umfangsringnut in der Innenumfangsfläche des radial äußeren Lagerteils oder/und der Außenumfangsfläche des radial inneren Lagerteils ausgebildet ist. Der Radius des Beginns der Flächen, deren Abstand, die Länge des von diesen Flächen gebildeten Kanals und die Viskosität des Schmiermittels, um nur einige Einflussgrößen zu nennen, bestimmen den Durchtrittswiderstand des ersten Abführwegs.

Der zweite Abführweg kann beispielsweise dadurch gebildet sein, dass der wenigstens eine zweite Schmierkanal in den Innenraum des Schmiermittel-Verteilelements mündet. In diesem, vorstehend bereits ganz allgemein angesprochenen Fall trägt der zweite Abführweg nicht oder nur in unwesentlichem Maße zur Drosselung des Schmiermittel-Flusses zu der weiteren Schmierstelle bei. Vielmehr wird der Strömungswiderstand des zu der weiteren Schmierstelle führenden Schmiermittelpfads praktisch ausschließlich durch den Strömungswiderstand des zweiten Schmierkanals bestimmt.

In Weiterbildung der Erfindung wird vorgeschlagen, das Schmiermittel-Verteilelement an dem radial äußeren Lagerteil festzulegen, beispielsweise mittels wenigstens eines Sicherungselements, und zwar vorzugsweise sowohl in Achsrichtung als auch in Umfangsrichtung. In Weiterbildung dieser Ausführungsvariante kann das Sicherungselement von einem Rohr gebildet sein, das in dem ersten Schmierkanal aufgenommen ist und in eine am Außenumfang des Schmiermittel-Verteilelements vorgesehene Sicherungsvertiefung eingreift, deren Bodenfläche eine zu einem Innenraum des Schmiermittel-Verteilelements führenden Zuführöffnung aufweist. Dies hat den Vorteil, dass keine zusätzlichen, das äußere Erscheinungsbild des Drehlagers beeinträchtigenden Bohrungen für die Einbringung von Sicherungsstiften in die Außenumfangsfläche des radial äußeren Lagerteils eingebracht werden müssen.

Ein radial inneres Ende des vorstehend angesprochenen Rohrs kann in den durchmesser-weiteren Abschnitt einer Stufenbohrung des Schmiermittel-Verteilelements eingreifen. Diese Stufenbohrung kann die Zuführöffnung des Schmiermittel-Verteilelements bilden, so dass durch das Rohr und die Stufenbohrung Schmierstoff in den Innenraum des Schmiermittel-Verteilelements zugeführt werden kann.

In Weiterbildung der Erfindung wird vorgeschlagen, das Schmiermittel-Verteilelement als Schmiermittel-Verteilring auszubilden. Der Begriff "Ring" ist dabei in der vollen Breite seiner Bedeutung zu verstehen und ist nicht nur auf sich über die gesamte Umfangslänge erstreckende Vollringe beschränkt. Insbesondere sollen auch Spaltringe von diesem Begriff erfasst sein, Gleichwohl ist aus funktions- und herstellungstechnischen Gründen die Ausbildung als Vollring bevorzugt.

Beispielsweise um das Schmiermittel-Verteilelement in einfacher Weise in einer Umfangsringnut des inneren Lagerteils anordnen zu können, wird in Weiterbildung der Erfindung vorgeschlagen, dass der radial innere Lagerteil zwei Lagerteilkörper umfasst, die mit axialen Stirnflächen aneinander anliegen. Dabei ist es aus herstellungstechnischen Gründen (beispielsweise höhere Stückzahl - niederigerer Preis) und Gründen der Lagerhaltung vorteilhaft, wenn die beiden Lagerteilkörper identisch ausgebildet und spiegelsymmetrisch angeordnet sind.

Insbesondere dann, wenn das radial innere Lagerteil des erfindungsgemäßen Drehlagers nicht einstückig mit demjenigen Bauelement ausgebildet ist, an dem die weitere Schmierstelle angeordnet ist, also beispielsweise im Unterschied zu den aus der DE 195 19 770 A1 bekannten Ausführungsformen nicht einstückig mit der Gewindemutter des Gewindetriebs ausgebildet ist, ist es vorteilhaft, wenn an der Innenumfangsfläche des radial inneren Lagerteils eine, sich vorzugsweise im Wesentlichen über den gesamten Umfang erstreckende, Ringnut vorgesehen ist. Es ist dann nämlich nicht erforderlich, bei der Montage dieses Bauelements in dem radial inneren Lagerteil auf eine bestimmte Relativorientierung in Umfangsrichtung zu achten. Vielmehr genügt es, wenn die in diesem weiteren Bauelement vorgesehenen Schmierkanäle in die Ringnut münden. Selbstverständlich kann zusätzlich oder alternativ auch an der Außenumfangsfläche des weiteren Bauelements, also beispielsweise der Gewindemutter eine weitere derartige Ringnut vorgesehen sein.

Das erfindungsgemäße Drehlager kann beispielsweise ein Wälzlager sein, und zwar vorzugsweise ein Wälzlager mit wenigstens zwei in Achsrichtung voneinander beabstandeten Reihen von Wälzkörpern. Dabei ist es ferner von Vorteil, wenn die Lastlinien der beiden Wälzkörperreihen mit der Achse einen schrägen Winkel einschließen, wobei die Lastlinien der beiden Wälzkörperreihen in einem die Achse enthaltenden Schnitt vorzugsweise eine O-Anordnung bilden, d.h. es ist vorteilhaft ein zweireihiges Schrägwälzkörperlager in O-Anordnung einzusetzen.

Die Verkippsicherheit des erfindungsgemäßen Drehlagers um orthogonal zu der Drehlagerachse verlaufende Kippachsen kann dadurch verbessert werden, dass der axiale Abstand der beiden Wälzkörperreihen kleiner ist als der Durchmesser dieser Wälzkörperreihen, vorzugsweise weniger als das 0,8-fache, noch bevorzugter weniger als das 0,5-fache dieses Durchmessers beträgt, beispielsweise etwa das 0,3-fache dieses Durchmessers. Gleiche Verkippsicherheit vorausgesetzt, ermöglichstes dies, das Drehlager axial kürzer zu bauen, als dies beispielsweise bei den aus der DE 195 19 770 A1 bekannten Wälzlagern der Fall ist. Der axiale Abstand der beiden Wälzkörperreihen wird dabei von Wälzkörperzentrum zu Wälzkörperzentrum zweier sich auf der gleichen Umfangsposition befindenden Wälzkörper gemessen. Analoges gilt auch für den Durchmesser der Wälzkörperreihen. Weil diese Ausführungsvariante die Eigenschaften des erfindungsgemäßen Drehlagers unabhängig vom Vorsehen eines gesonderten Schmiermittel-Verteilelements verbessert, wird für diese Variante gesonderter Schutz angestrebt.

Die beiden Wälzkörperreihen können einen Durchmesser von beispielsweise etwa 65 mm aufweisen. Darüber hinaus ist es vorteilhaft, wenn die Wälzkörper in Wälzkörperkäfigen geführt und gewünschtenfalls gehalten sind. Schließlich können die Wälzkörper Kugeln, Rollen oder dergleichen sein.

Die Erfindung betrifft ferner einen Gewindetrieb mit einer Gewindespindel, einer mit der Gewindespindel in Gewindeeingriff stehenden Gewindemutter und dem erfindungsgemäßen Drehlager, wobei die Gewindemutter und das radial innere Lagerteil des Drehlagers als voneinander getrennte Bauteile ausgebildet sind, welche bei der Montage des Gewindetriebs aneinander befestigbar sind, und wobei in der Gewindemutter wenigstens ein dritter Schmierkanal ausgebildet ist, der mit dem zweiten Schmierkanal in Schmiermittel-Zufuhrverbindung steht.

Dieser Gewindetrieb unterscheidet sich von den aus der DE 195 19 770 A1 bekannten Gewindetrieben vor allem dadurch, dass die Gewindemutter und das radial innere Lagerteil des Drehlagers als voneinander getrennte Bauteile ausgebildet sind. Dies vereinfacht die Fertigung des Gewindetriebs, da zur Bereitstellung eines Gewindetriebs mit drehgelagerter Gewindemutter sowohl für die Herstellung des Drehlagers als auch für die Herstellung des eigentlichen Gewindetriebs die ausgefeilten herkömmlichen Techniken eingesetzt werden können und keinerlei Kompromisse bei der Fertigung der Gewindemutter oder des radial inneren Lagerteils des Drehlagers eingegangen werden müssen.

Selbstverständlich kommen bei diesem Gewindetrieb bevorzugt die vorstehend beschriebenen Drehlager zum Einsatz, so dass hinsichtlich der Weiterbildungsmöglichkeiten auf die vorstehende Diskussion des erfindungsgemäßen Drehlagers verwiesen werden kann.

Als Schmiermittel kann bei hohen Drehzahlen bzw. Verfahrgeschwindigkeiten des Maschinentischs Schmieröl vorteilhaft sein, wenngleich Schmierfett keinesfalls ausgeschlossen ist.

Nach einem weiteren Aspekt betrifft die Erfindung einen Gewindetrieb, umfassend eine Spindel mit einer Spindelachse, eine mit der Spindel in Gewindeeingriff stehende Mutter, ein Drehlager mit zwei bezogen auf die Spindelachse zentrisch ineinander angeordneten, relativ zueinander um die Spindelachse drehbaren und radial zwischen sich einen Ringraum begrenzenden Lagerteilen, deren radial inneres mit der Mutter drehfest verbunden oder verbindbar ist, und ein Schmiermittelversorgungssystem zur Versorgung der Lagereingriffsflächen der beiden Lagerteile sowie der Gewindeeingriffsflächen der Spindel und der Mutter mit Schmiermittel, wobei mindestens ein aus einer Schmiermittelquelle mit Schmiermittel speisbarer Schmiermittelzufuhrweg des Schmiermittelversorgungssystems durch das radial äußere der beiden Lagerteile zu dem Ringraum führt und sich dort in mindestens zwei Abzweigwege verzweigt, von denen mindestens ein erster in dem Ringraum zu wenigstens einem Teil der Lagereingriffsflächen führt und von denen mindestens ein zweiter durch das radial innere Lagerteil zu wenigstens einem Teil der Gewindeeingriffsflächen führt.

Erfindungsgemäß ist bei einem solchen Gewindetrieb vorgesehen, dass mindestens einer der beiden Abzweigwege eine steuerbare Drosselstelle enthält.

Die Vorsehung einer steuerbaren Drosselstelle erlaubt eine Steuerung des Nachschubs an Schmiermittel zu den Lagereingriffsflächen oder/und den Gewindeeingriffsflächen. Insbesondere kann durch Veränderung des Öffnungsquerschnitts der Drosselstelle das Verhältnis der über die beiden Abzweigwege geförderten Schmiermittelmengen beeinflusst werden. Hierzu kann es besonders günstig sein, wenn die Drosselstelle als steuerbare Absperrstelle ausgebildet ist, welche zwischen mindestens einer Öffnungsstellung, in der sie den Durchfluss von Schmiermittel gestattet, und einer Schließstellung verstellbar ist, in der der Schmiermitteldurchfluss im Wesentlichen unterbunden ist. Auf diese Weise ist es möglich, bei Bedarf den Schmiermittelnachschub zumindest vorübergehend vollständig in einen der Abzweigwege zu leiten. Dies kann beispielsweise vorteilhaft sein, wenn nur an den Lagereingriffsflächen oder nur an den Gewindeeingriffsflächen Nachschmierbedarf besteht.

Bevorzugt ist der Öffnungsquerschnitt der Drosselstelle abhängig vom Schmiermitteldruck in dem Schmiermittelzufuhrweg steuerbar. Insbesondere bei Verwendung von Schmierfett als Schmiermittel kann so auf einfache Weise über den Schmiermitteldruck im Schmiermittelzuführweg das Verhältnis der Schmiermittelmengen bestimmt werden, die den Lagereingriffsflächen und den Gewindeeingriffsflächen zugeführt werden. In der Praxis hat es sich gezeigt, dass der Schmiermittelverbrauch an den Gewindeeingriffsflächen häufig größer als an den Lagereingriffsflächen ist. Dies kann zur Folge haben, dass der für die Schmierung der Gewindeeingriffsflächen bereitstehende Schmierstoffvorrat bereits verbraucht ist, während für die Schmierung der Lagereingriffsflächen im ersten Abzweigeweg noch Schmierstoff zur Verfügung steht. Wenn dann eine Nachfüllung des Schmiermittelversorgungssystems mit frischem Schmiermittel erfolgt, wird man anstreben, dass dieses frische Schmiermittel überwiegend oder sogar ausschließlich in den zweiten Abzweigweg gelangt, um eine Überversorgung der Lagereingriffsflächen zu vermeiden. Eine bevorzugte Ausführungsform der Erfindung nach dem die steuerbare Drosselstelle betreffenden Aspekt sieht deshalb vor, dass die Drosselstelle in dem ersten Abzweigweg angeordnet ist und ihr Öffnungsquerschnitt bei einem höheren Schmiermitteldruck im Schmiermittelzufuhrweg kleiner und bei einem niedrigeren Schmiermitteldruck größer ist.

Zur Realisierung der Drosselstelle kann das radial äußere Lagerteil innenumfangsseitig mindestens eine in den Ringraum ragende, flexibel auslenkbare Ringzunge tragen, wobei die Drosselstelle zwischen einer der Zungenseitenflächen und einer an der Außenumfangssseite des radial inneren Lagerteil gebildeteten Drosselbegrenzungsfläche begrenzt ist und die Ringzunge mit ihrer entgegengesetzten Zungenseitenfläche an den Schmiermittelzufuhrweg grenzt. Je nachdem, wie hoch der Schmiermitteldruck im Schmiermittelzufuhrweg ist, wird bei dieser Ausführungsform die Ringzunge mehr oder weniger stark zu der Drosselbegrenzungsfläche hin ausgelenkt, was einer mehr oder weniger starken Einengung der Drosselstelle entspricht. Die Ringzunge kann materialeinheitlich mit dem äußeren Lagerteil hergestellt sein. Alternativ kann sie gesondert von dem äußeren Lagerteil hergestellt sein. Insbesondere kann die Ringzunge von einem der U-Schenkel eines im Querschnitt annähernd U-förmigen Schmiermittelverteilrings gebildet sein, wie er zuvor beschrieben wurde. Jeder der U-Schenkel dieses Verteilrings kann dabei eine flexible Ringzunge bilden. Im Übrigen versteht es sich, dass der Aspekt der steuerbaren Drosselstelle unabhängig davon ist, ob die Mutter materialeinheitlich mit dem radial inneren Lagerteil oder baulich gesondert von diesem hergestellt ist.

Die Erfindung wird im Folgenden an einem Ausführungsbeispiel anhand der beigefügten Zeichnung näher erläutert werden. Es stellt dar:
- Fig. 1: eine geschnittene Seitenansicht eines mit einem erfindungsgemäßen Drehlager ausgestatteten Gewindetriebs;
- Fig. 2: eine vergrößerte Darstellung des in Fig. 1 gezeigten Drehlagers; und
- Fig. 3: eine vergrößerte Darstellung des in Fig. 2 mit B bezeichneten Bereichs eines Drehlagers.

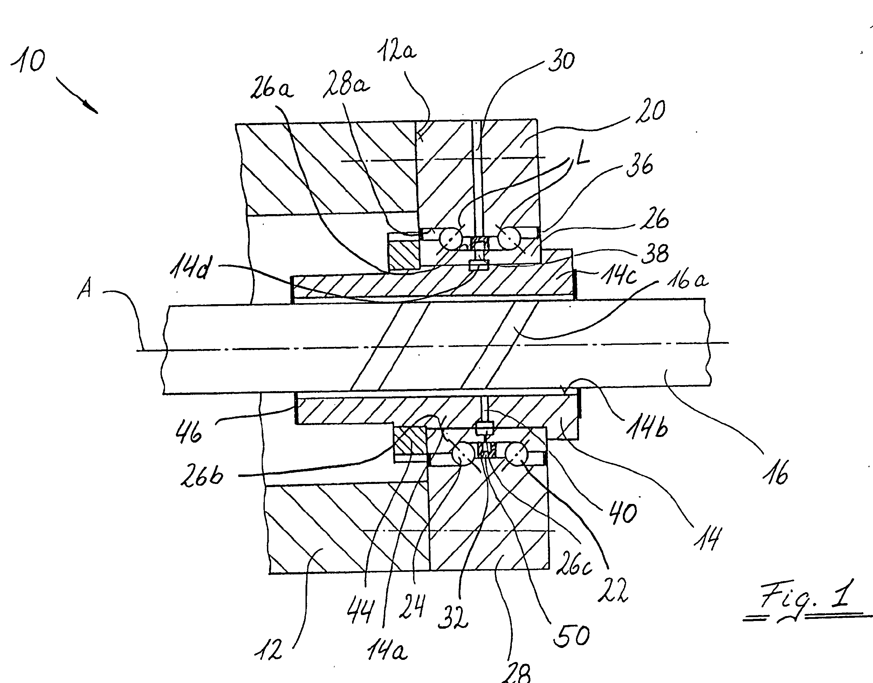

Bereits an dieser Stelle sei darauf hingewiesen, dass die Darstellungen des Wälzlagers in den Figuren 1 bis 3 nicht vollends maßstabs- bzw. detailgetreu übereinstimmen, sondern sich durchaus in einigen Einzelheiten voneinander unterscheiden.

In Fig. 1 ist ein erfindungsgemäßer Gewindetrieb allgemein mit 10 bezeichnet. Der Gewindetrieb 10 dient zur Verlagerung eines Maschinentischs 12 in Richtung der Achse A. Und zwar kann der Maschinentisch 12 beispielsweise Teil einer herkömmlichen Linearführungsanordnung sein, bei welcher er längs einer in den Figuren nicht dargestellten Führungsschiene bzw. in einem in den Figuren nicht dargestellten Führungsgehäuse in Richtung der Achse A verlagerbar geführt ist. Wie im Folgenden noch im Einzelnen ausgeführt werden wird, handelt es sich bei dem Gewindetrieb 10 um einen Gewindetrieb mit drehgelagerter Gewindemutter 14. Daher ist die mit der Gewindemutter 14 insbesondere über Wälzkörper, beispielsweise Kugeln, in Gewindeeingriff stehende Gewindespindel 16 an zwei Endplatten dieser Führungsschiene bzw. dieses Führungsgehäuses drehfest angeordnet. Die Wälzkörperlaufbahnen der Gewindespindel 16 sind in Fig. 1 grob schematisch dargestellt und mit 16a bezeichnet.

Zur drehbaren Lagerung der Gewindemutter 14 ist an einer Stirnfläche 12a des Maschinentischs 12 ein Drehlager 20 befestigt, beispielsweise über grob schematisch strichpunktiert angedeutete Schraubbolzen. Das Drehlager 20 ist in dem dargestellten Ausführungsbeispiel als Kugellager ausgebildet, und zwar genau gesagt als zweireihiges Schrägkugellager in 0-Anordnung. D.h. die Lastlinien L der beiden Kugelreihen 22 und 24 verlaufen bezüglich der Achse A unter einem nicht verschwindenden, schrägen Winkel und bilden, in der Schnittdarstellung gemäß Fig. 1 grob schematisch betrachtet, die Form eines "O".

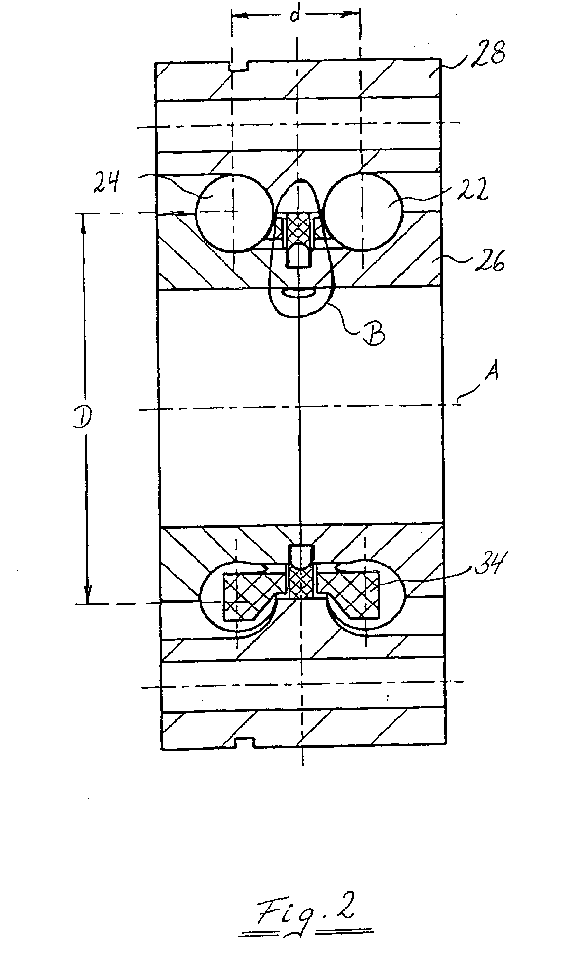

Wie insbesondere in Fig. 2 dargestellt ist, weist der Durchmesser D der beiden Wälzkörperreihen 22 und 24 einen größeren Wert auf, als der in Richtung der Achse A gemessene Abstand d dieser Kugelreihen 22 und 24. Und zwar beträgt der Abstand d vorzugsweise höchstens das 0,8-fache, bevorzugter höchstens das 0,5-fache, und noch bevorzugter lediglich das 0,3-fache des Durchmessers D. Dies hat insbesondere in Verbindung mit der "O"-Anordnung den Vorteil einer hohen Verkippsicherheit des radial inneren Lagerteils 26 relativ zum radial äußeren Lagerteil 28 um orthogonal zur Drehachse A verlaufende Kippachsen.

In dem radial äußeren Lagerteil 28 des Wälzlagers 20 ist ein erster Schmierkanal 30 ausgebildet, an dessen radial äußerem Ende ein Schmiernippel oder eine andere geeignete Vorrichtung zur Zufuhr von Schmiermittel angeordnet bzw. angeschlossen sein kann. Das radial innere Ende dieses ersten Schmierkanals 30 mündet in einen Ringraum 32, der von der Innenumfangsfläche 28a des radial äußeren Lagerteils 28, der Außenumfangsfläche 26a des radial inneren Lagerteils 26 und den Wälzkörpern der beiden Wälzkörperreihen 22 und 24 umschlossen ist. Da die Wälzkörper vorzugsweise in Wälzkörper-Käfigen 34 geführt und ggf. auch gehalten sind (siehe Fig. 2) kann das Schmiermittel auch zwischen den Wälzkörpern hindurchtreten und zu den axialen Stirnflächen der beiden Lagerteile 26 und 28 gelangen. Ein unerwünschter Austritt von Schmiermittel wird dort durch Dichtungen 36 (siehe Fig. 1) verhindert.

Mittels der Zufuhr von Schmiermittel durch den ersten Schmierkanal 30 in den Ringraum 32 ist eine zuverlässige Schmierung der Wälzkörper der beiden Wälzkörperreihen 22 und 24 und der für diese vorgesehenen Laufbahnen am radial äußeren Lagerteil 28 und am radial inneren Lagerteil 26 sichergestellt.

Um mittels des durch den ersten Schmierkanal 30 zugeführten Schmiermittels auch die Schmierung der Eingriffsflächen des eigentlichen Gewindetriebs, d.h. der Eingriffsflächen der Gewindemutter 14 und der Gewindespindel 16, sicherstellen zu können, durchsetzt in dem dargestellten Ausführungsbeispiel ein zweiter Schmierkanal 38 das radial innere Lagerteil 26 in radialer Richtung. Genauer gesagt erstreckt sich der Schmierkanal 38 ausgehend von dem Ringraum 32, d.h. von der Außenumfangsfläche 26a des radial inneren Lagerteils bis zu dessen Innenumfangsfläche 26b. Ferner steht dieser zweite Schmierkanal 38 mit einem dritten Schmierkanal 40 in Schmiermittel-Durchtrittsverbindung, wobei dieser dritte Schmierkanal 40 die Gewindemutter 14 radial durchsetzt. Insbesondere mündet der dritte Schmierkanal 40 in die Innenumfangsfläche 14b der Gewindemutter 14, in der auch die Eingriffsflächen für die Gegeneingriffsflächen der Gewindespindel 16 ausgebildet sind, insbesondere die schraubenförmig verlaufenden Laufbahnen für die Wälzkörper wenigstens eines zwischen der Gewindemutter 14 und der Gewindespindel 16 vorgesehenen Wälzkörperumlaufs.

In dem in Fig. 1 dargestellten Ausführungsbeispiel besitzt die Gewindemutter 14 an ihrem rechten Ende eine Schulter 14c, mit der sie dann, wenn sie durch das Lumen des radial inneren Lagerteils 26 hindurchgeführt worden ist, an diesem radial inneren Lagerteil 26 eng anliegt, und in einfacher Weise mittels einer Kontermutter 44 gesichert werden kann. Damit bei dieser Montage der Gewindemutter 14 in dem radial inneren Lagerteil 26 nicht auf eine präzise Umfangsorientierung dieser beiden Teile geachtet zu werden braucht, um einen Schmiermittel-Übertritt zwischen dem zweiten Schmierkanal 38 und dem dritten Schmierkanal 40 sicherzustellen, ist an der Innenumfangsfläche 26b des radial inneren Lagerteils 26 eine in Umfangsrichtung umlaufende Nut 26c ausgebildet, und ist an der radial äußeren Umfangsfläche 14a der Gewindemutter 14 eine umlaufende Ringnut 14d vorgesehen. Die Schmiermittel-Zufuhr von dem Ringraum 32 zu den Eingriffsflächen des eigentlichen Gewindetriebs 14/16 erfolgt also über den zweiten Schmierkanal 38 die beiden Ringnuten 26c und 14d und den dritten Schmierkanal 40.

Damit zwischen dem radial inneren Lagerteil 26 und der Gewindemutter 14 keine gesonderte Dichtungen vorgesehen zu werden brauchen, empfiehlt es sich, diese beiden Teile passgenau zu fertigen. Festzuhalten ist, dass es zur sicheren Schmiermittel-Durchtrittsverbindung zwischen dem zweiten Schmierkanal 38 und dem dritten Schmierkanal 40 auch genügt, entweder nur in der Innenumfangsfläche 26b des radial inneren Lagerteils 26 die Ringnut 26c vorzusehen oder nur in der Außenumfangsfläche 14a der Gewindemutter 14 die Umfangsnut 14d vorzusehen. Des weiteren sei darauf hingewiesen, dass an den Axialenden der Gewindemutter 14 Dichtungen 46 vorgesehen sind, welche einen Austritt von Schmiermittel zuverlässig verhindern.

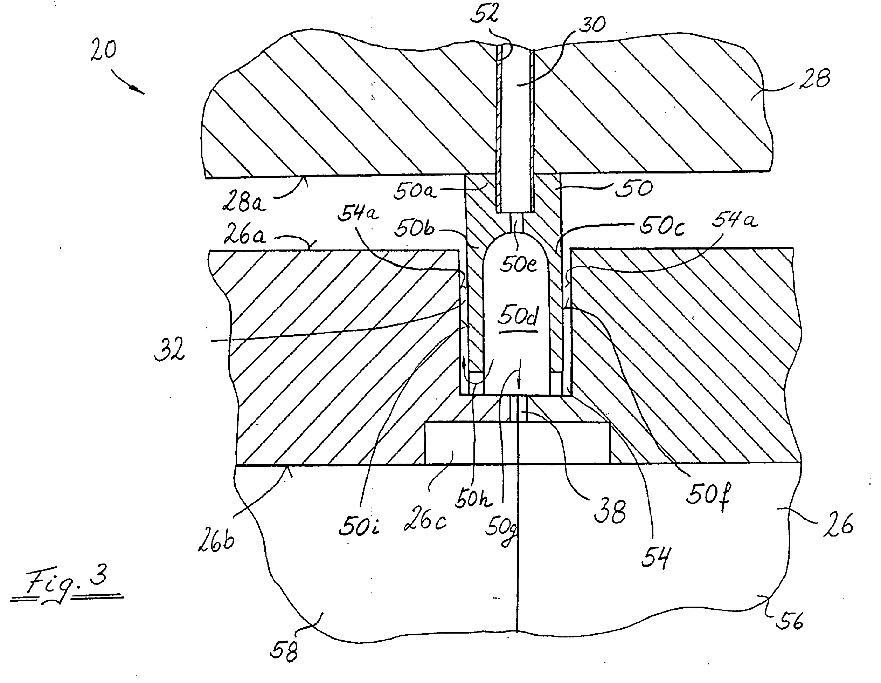

Um nun die Verteilung des über den ersten Schmierkanal 30 zugeführten Schmiermittels auf die beiden Schmierstellen, nämlich zum einen die Eingriffsflächen zwischen dem radial inneren Lagerteil 26 und dem radial äußeren Lagerteil 28 und zum anderen die Eingriffsflächen zwischen Gewindemutter 14 und Gewindespindel 16, in dem gewünschten Maße beeinflussen zu können, ist in dem Ringraum 32 zwischen den beiden Lagerteilen 26 und 28 des Wälzlagers 20 ein Schmiermittel-Verteilring 50 vorgesehen, dessen Aufbau und Funktion im Folgenden mit Bezug auf Fig. 3 näher erläutert werden sollen.

Der Schmiermittel-Verteilring 50 weist eine im Querschnitt gemäß Fig. 3 im Wesentlichen U-förmige Gestalt auf mit einem Basissteg 50a und zwei Seitenschenkeln 50b und 50c. Diese U-Form definiert einen Innenraum 50d, der über eine als Stufenbohrung ausgeführte Zuführöffnung 50e mit dem ersten Schmierkanal 30 in Verbindung steht. Genauer gesagt ist in den ersten Schmierkanal 30 ein Schmiermittel-Zuführrohr 52 eingesetzt, das mit seinem radial inneren Ende in den durchmesser-erweiterten Abschnitt der Stufenbohrung 50e eingreift. Auf diese Weise kann der Schmiermittel-Verteilring 50 durch das Schmiermittel-Zuführrohr 52 sowohl in Richtung der Achse A axialfest als auch in Umfangsrichtung drehfest an dem radial äußeren Lagerteil 28 gesichert werden. Ferner ist der Außendurchmesser des Schmiermittel-Verteilrings 50 an den Innendurchmesser des äußeren Lagerteils 28 angepasst, so dass auch eine Radialbewegung zwischen Schmiermittel-Verteilring 50 und radial äußerem Lagerteil 28 verhindert ist.

An seinem radial inneren Ende ist der Schmiermittel-Verteilring 50 offen ausgebildet, so dass sein Innenraum 50d frei mit dem zweiten Schmiermittelkanal 38 kommuniziert, dessen Durchmesser im Zusammenwirken mit den weiteren Strömungsstrecken 26c, 14d und 40 den Strömungswiderstand für die Zufuhr von Schmiermittel zu den Eingriffsflächen von Gewindemutter 14 und Gewindespindel 16 bestimmt.

Der Strömungswiderstand für die Zufuhr von Schmiermittel zu den Eingriffsflächen 26a und 28a der beiden Lagerteile 26, 28 und den beiden Kugelreihen 22 und 24 wird durch Zusammenwirken von Abschnitten der axialen Stirnflächen 50i und 50f mit Gegenflächen 54a einer Ringnut 54 des radial inneren Lagerteils 26 bestimmt. Da dieser Strömungswiderstand sehr stark von der Weite der zwischen diesen Stirnflächen gebildeten Strömungswege 50i/54a, 50f/54a abhängt, ist die axiale Fixierung des Schmiermittel-Verteilrings 50 durch das Schmiermittel-Zuführrohr 52 von besonderer Bedeutung.

Auf diese Weise bildet das nach radial innen offene Ende der U-Form des Schmiermittel-Verteilrings 50 einen Schmiermittel-Abströmweg 50g, der zu den Eingriffsflächen von Gewindemutter 14 und Gewindespindel 16 führt, während es in Verbindung mit den Stirnflächenpfaden 50i/54a, 50f/54a einen Abströmweg 50h bildet, der zu den Eingriffsflächen der beiden Lagerteile 26, 28 führt.

Nachzutragen ist noch, dass das radial innere Lagerteil 26 gemäß Fig. 3 aus zwei spiegelsymmetrisch angeordneten, ansonsten jedoch identisch ausgebildeten Lagerteilhälften 56 und 58 gebildet ist, um das Einsetzen des Schmiermittel-Verteilrings 50 in die Ringnut 54 ohne Weiteres ermöglichen zu können.

Es wurde bisher davon ausgegegangen, dass der Schmiermittelverteilring 50 ein gesondert von dem radial äußeren Lagerteil 28 hergestelltes Bauteil ist, das mittels des Zuführrohrs 52 an dem äußeren Lagerteil 28 sicherbar ist. Alternativ ist es denkbar, dass der Schmiermitterverteilring 50 materialeinheitlich mit dem äußeren Lagerteil 28 hergestellt ist, beispielsweise durch ein Spritzgieß- oder ein Druckgußverfahren. Insbesondere im Fall einer solchen materialeinheitlichen Herstellung des äußeren Lagerteils 28 mit dem Schmiermittelverteilring 50 kann es herstellungstechnische Vorteile bieten, nicht nur das innere Lagerteil 26, sondern auch die Einheit aus äußerem Lagerteil 28 und Verteilring 50 aus zwei gesonderten, spiegelsymmetrischen Hälften herzustellen.

Ferner ist es günstig, wenn die U-Schenkel 50b, 50c des Verteilrings 50 eine gewisse Elastizität besitzen, so dass sie flexibel auslenkbare Zungen bilden, die zumindest im Bereich ihrer dem Nutgrund der Ringnut 54 benachbarten freien Enden an die Gegenflächen 54a der Ringnut 54 annäherbar und insbesondere auch gegen diese drückbar sind. Die Drosselstellen, die zwischen den Stirnflächen 50e, 50f des Verteilrings 50 und den Gegenflächen 54a der Ringnut 54 gebildet sind, können auf diese Weise in ihrem Durchflussquerschnitt verringert und gegebenenfalls sogar vollständig verschlossen werden. Wird als Schmiermittel ein zähflüssiges bis pastöses Schmierfett durch den ersten Schmierkanal 30 in das Wälzlager 20 eingepresst, so drückt das sich im Innenraum 50d des Verteilrings 50 sammelnde Fett die U-Schenkel 50b, 50c aneinander. Dies hat zur Folge, dass das eingefüllte Fett gar nicht mehr oder nur noch in stark verringertem Maße in die beiden rechts und links an dem Verteilring 50 vorbeiführenden Abströmwege 50h gelangt, sondern stattdessen nahezu ausschließlich durch den zweiten Schmiermittelkanal 38 zu den Eingriffsflächen zwischen Gewindemutter 14 und Gewindespindel 16 gefördert wird. Sobald der Druck des Schmierfetts im Innenraum 50d des Verteilrings 50 absinkt, können die U-Schenkel 50b, 50c wieder in ihre Ursprungslage zurückschwenken, so dass die Abströmwege 50h ihre ursprüngliche Öffnungsweite zurückerlangen. Dann kann Fett aus dem Innenraum 50d auch wieder zu den Wälzkörperreihen 22, 24 und den zugeordneten Wälzbahnen an den Lagerteilen 26, 28 gelangen. Die zeitweilige Sperrung der Abströmwege 50h hat den Vorteil, dass hierdurch eine Überversorgung des Wälzlagers 20 mit Schmierfett verhindert wird. Solches überschüssiges Fett könnte nach einiger Zeit, nämlich durch die Dichtungen 36 hindurch, nach außen gedrückt werden. Der Einbau steuerbarer Drosselstellen in die Abströmwege 50h verhindert derartige Leckverluste.

## Patentansprüche

1. Drehlager (20) mit einer Schmierkanalanordnung zum Zuführen von Schmiermittel sowohl zu den Eingriffsflächen eines radial inneren Lagerteils (26) und eines radial äußeren Lagerteils (28) des Drehlagers (20) als auch zu wenigstens einer weiteren Schmierstelle, wobei das radial innere Lagerteil (26) und das radial äußere Lagerteil (28) um eine Achse (A) des Drehlagers (20) relativ zueinander verdrehbar sind, und wobei die Schmierkanalanordnung umfasst:
- wenigstens einen ersten Schmierkanal (30), dessen eines Ende in die Innenumfangsfläche (28a) des radial äußeren Lagerteils (28) mündet und dessen anderes Ende mit einer Schmiermittelzufuhr verbindbar ist,
- wenigstens einen zweiten Schmierkanal (38), der von der Außenumfangsfläche (26a) des radial inneren Lagerteils (26) zu dessen Innenumfangsfläche (26b) führt, und
- einen Ringraum (32), der zwischen der Innenumfangsfläche (28a) des äußeren Lagerteils (28) und der Außenumfangsfläche (26a) des inneren Lagerteils (26) gebildet ist, wobei sowohl der wenigstens eine erste Schmierkanal (30) als auch der wenigstens eine zweite Schmierkanal (38) in den Ringraum (32) münden,
**dadurch gekennzeichnet, dass** in dem Ringraum (32) ein als gesondertes Bauteil ausgebildetes Schmiermittel-Verteilelement (50) angeordnet ist, welches mit dem wenigstens einen ersten Schmierkanal (30) in Schmiermittel-Zufuhrverbindung steht, wobei in oder/und an dem Schmiermittel-Verteilelement (50) wenigstens ein erster Abführweg (50h) vorgesehen ist, um den Eingriffsflächen des Drehlagers (20) Schmiermittel zuzuführen, und wobei in oder/und an dem Schmiermittel-Verteilelement (50) ferner wenigstens ein zweiter Abführweg (50g) vorgesehen ist, um über den wenigstens einen zweiten Schmierkanal (38) der wenigstens einen weiteren Schmierstelle Schmiermittel zuzuführen.

2. Drehlager nach Anspruch 1,
**dadurch gekennzeichnet, dass** das Schmiermittel-Verteilelement (50) einen im Wesentlichen U-förmigen Querschnitt autweist, mit zwei Seitenschenkeln (50b, 50c) und einem diese verbindenden Quersteg (50a).

3. Drehlager nach Anspruch 2,
**dadurch gekennzeichnet, dass** in dem Quersteg (50a) wenigstens eine Zuführöffnung (50e) vorgesehen ist, durch welche Schmiermittel von dem wenigstens einen ersten Schmierkanal (30) in den von dem Quersteg (50a) und den beiden Seitenschenkeln (50b, 50c) der U-Form umgrenzten Innenraum (50d) des Schmiermittel-Verteilelements (50) zuführbar ist.

4. Drehlager nach einem der vorhergehenden Ansprüche,
**dadurch gekennzeichnet, dass** der erste Abführweg (50h) zumindest teilweise zwischen einer im Wesentlichen orthogonal zur Achsrichtung verlaufenden Außenfläche (50i, 50f) des Schmiermittel-Verteilelements (50) und einer ebenfalls im Wesentlichen orthogonal zur Achsrichtung verlaufenden Gegenfläche (54a) des Ringraums (32) ausgebildet ist.

5. Drehlager nach einem der vorhergehenden Ansprüche,
**dadurch gekennzeichnet, dass** der zweite Abführweg (50g) **dadurch** gebildet ist, dass der wenigstens eine zweite Schmierkanal (38) in den Innenraum (50d) des Schmiermittel-Verteilelements (50) mündet.

6. Drehlager nach einem der vorhergehenden Ansprüche,
**dadurch gekennzeichnet, dass** das Schmiermittel-Verteilelement (50) mittels wenigstens eines Sicherungselements (52) bezüglich des radial äußeren Lagerteils (28) fixiert ist, und zwar vorzugsweise sowohl in Achsrichtung (A) als auch in Umfangsrichtung.

7. Drehlager nach Anspruch 6,
**dadurch gekennzeichnet, dass** das Sicherungselement von einem Rohr (52) gebildet ist, das in dem ersten Schmierkanal (30) aufgenommen ist und in eine am Außenumfang des Schmiermittel-Verteilelements (50) vorgesehene Sicherungsvertiefung eingreift, deren Bodenfläche eine zu einem Innenraum (50d) des Schmiermittel-Verteilelements (50) führenden Zuführöffnung (50e) aufweist.

8. Drehlager nach einem der vorhergehenden Ansprüche,
**dadurch gekennzeichnet, dass** das Schmiermittel-Verteilelement (50) als Schmiermittel-Verteilring ausgebildet ist.

9. Drehlager nach einem der vorhergehenden Ansprüche,
**dadurch gekennzeichnet, dass** der radial innere Lagerteil (26) zwei Lagerteilkörper (56, 58) umfasst, die mit axialen Stirnflächen aneinander anliegen.

10. Drehlager nach Anspruch 9,
**dadurch gekennzeichnet, dass** die beiden Lagerteilkörper (56, 58) identisch ausgebildet und spiegelsymmetrisch angeordnet sind.

11. Drehlager nach einem der vorhergehenden Ansprüche,
**dadurch gekennzeichnet, dass** an der Innenumfangsfläche (26b) des radial inneren Lagerteils (26) eine, sich vorzugsweise im Wesentlichen über den gesamten Umfang erstreckende, Ringnut (26c) vorgesehen ist.

12. Drehlager nach einem der vorhergehenden Ansprüche,
**dadurch gekennzeichnet, dass** das Drehlager (20) ein Wälzlager ist, das vorzugsweise wenigstens zwei in Achsrichtung (A) voneinander beabstandete Reihen (22, 24) von Wälzkörpern aufweist.

13. Drehlager nach Anspruch 12,
**dadurch gekennzeichnet, dass** die Lastlinien (L) der beiden Wälzkörperreihen (22, 24) mit der Achse (A) einen schrägen Winkel einschließen, wobei die Lastlinien (L) der beiden Wälzkörperreihen (22, 24) in einem die Achse (A) enthaltenden Schnitt vorzugsweise eine O-Anordnung bilden.

14. Drehlager nach Anspruch 12 oder 13,
**dadurch gekennzeichnet, dass** der axiale Abstand (d) der beiden Wälzkörperreihen (22, 24) kleiner ist als der Durchmesser (D) dieser Wälzkörperreihen (22, 24), vorzugsweise weniger als das 0,8-fache, noch bevorzugter weniger als das 0,5-fache dieses Durchmessers beträgt, beispielsweise etwa das 0,3-fache dieses Durchmessers.

15. Gewindetrieb (10) mit
- einer Gewindespindel (16),
- einer mit der Gewindespindel (16) in Gewindeeingriff stehenden Gewindemutter (14) und
- einem Drehlager (20) nach Anspruch 1,
wobei die Gewindemutter (14) und das radial innere Lagerteil (26) des Drehlagers (20) als voneinander getrennte Bauteile ausgebildet sind, welche bei der Montage des Gewindetriebs aneinander befestigbar sind, und
wobei in der Gewindemutter (14) wenigstens ein dritter Schmierkanal (40) ausgebildet ist, der mit dem zweiten Schmierkanal (38) in Schmiermittel-Zufuhrverbindung steht.

16. Gewindetrieb nach Anspruch 15,
**dadurch gekennzeichnet, dass** das Drehlager (20) ein Drehlager nach einem der vorhergehenden Ansprüche ist.

17. Gewindetrieb nach Anspruch 15 oder 16,
**dadurch gekennzeichnet, dass** in der Innenumfangsfläche (26b) des radial inneren Lagerteils (26) an den zweiten Schmierkanal (38) anschließend eine im Wesentlichen in Umfangsrichtung verlaufende Schmiernut (26c) vorgesehen ist.

18. Gewindetrieb nach einem der Ansprüche 15 bis 17,
**dadurch gekennzeichnet, dass** in der Außenumfangsfläche der Gewindemutter (14) an den dritten Schmierkanal (38) anschließend eine im Wesentlichen in Umfangsrichtung verlaufende Schmiernut (14d) vorgesehen ist.

19. Gewindetrieb, insbesondere nach einem der Ansprüche 15 bis 18, umfassend
- eine Spindel (16) mit einer Spindelachse (A),
- eine mit der Spindel (16) in Gewindeeingriff stehende Mutter (14),
- ein Drehlager (20), insbesondere nach einem der Ansprüche 1 bis 14, mit zwei bezogen auf die Spindelachse (A) zentrisch ineinander angeordneten, relativ zueinander um die Spindelachse (A) drehbaren und radial zwischen sich einen Ringraum (32) begrenzenden Lagerteilen (26, 28), deren radial inneres (26) mit der Mutter (14) drehfest verbunden oder verbindbar ist, und
- ein Schmiermittelversorgungssystem (30, 50e, 50d, 50h, 50g) zur Versorgung der Lagereingriffsflächen der beiden Lagerteile (26, 28) sowie der Gewindeeingriffsflächen der Spindel (16) und der Mutter (14) mit Schmiermittel, wobei mindestens ein aus einer Schmiermittelquelle mit Schmiermittel speisbarer Schmiermittelzufuhrweg (30, 50e, 50d) des Schmiermittelversorgungssystems durch das radial äußere (28) der beiden Lagerteile (26, 28) zu dem Ringraum (32) führt und sich dort in mindestens zwei Abzweigwege (50h, 50g) verzweigt, von denen mindestens ein erster (50h) in dem Ringraum (32) zu wenigstens einem Teil der Lagereingriffsflächen führt und von denen mindestens ein zweiter (50g) durch das radial innere Lagerteil (26) zu wenigstens einem Teil der Gewindeeingriffsflächen führt,
**dadurch gekennzeichnet, dass** mindestens einer (50h) der beiden Abzweigwege (50h, 50g) eine steuerbare Drosselstelle (50i - 54a, 50f - 54a) enthält.

20. Gewindetrieb nach Anspruch 19, **dadurch gekennzeichnet, dass** die Drosselstelle (54i - 54a, 50f - 54a) als steuerbare Absperrstelle ausgebildet ist, welche zwischen mindestens einer Öffnungsstellung, in der sie den Durchfluss von Schmiermittel gestattet, und einer Schließstellung verstellbar ist, in der der S.chmiermitteldurchfluss im Wesentlichen unterbunden ist.

21. Gewindetrieb nach Anspruch 19 oder 20, **dadurch gekennzeichnet, dass** der Öffnungsquerschnitt der Drosselstelle (50i - 54a, 50f - 54a) abhängig vom Schmiermitteldruck in dem Schmiermittelzufuhrweg (30, 50e, 50d) steuerbar ist.

22. Gewindetrieb nach Anspruch 21, **dadurch gekennzeichnet, dass** die Drosselstelle (50i - 54a, 50f - 54a) in dem ersten Abzweigweg (50h) angeordnet ist und ihr Öffnungsquerschnitt bei einem höheren Schmiermitteldruck im Schmiermittelzufuhrweg (30, 50e, 50d) kleiner und bei einem niedrigeren Schmiermitteldruck größer ist.

23. Gewindetrieb nach Anspruch 22, **dadurch gekennzeichnet, dass** das radial äußere Lagerteil (28) innenumfangsseitig mindestens eine in den Ringraum (32) ragende, flexibel auslenkbare Ringzunge (50b, 50c) trägt, wobei die Drosselstelle (50i - 54a, 50f - 54a) zwischen einer (50i, 50f) der Zungenseitenflächen und einer an der Außenumfangsseite des radial inneren Lagerteils (26) gebildeten Drosselbegrenzungsfläche (54a) begrenzt ist und die Ringzunge (50b, 50c) mit ihrer entgegengesetzten Zungenseitenfläche an den Schmiermittelzufuhrweg (30, 50e, 50d) grenzt.

24. Gewindetrieb nach Anspruch 23, **dadurch gekennzeichnet, dass** die Ringzunge materialeinheitlich mit dem äußeren Lagerteil (28) hergestellt ist.

25. Gewindetrieb nach Anspruch 23, **dadurch gekennzeichnet, dass** die Ringzunge (50b 50c) gesondert von dem äußeren Lagerteil (28) hergestellt ist.

## Claims

1. A rotary bearing (20) with a lubricant passage arrangement for supplying a lubricant both to engaging surfaces of a radially inner bearing part (26) and a radially outer bearing part (28) of the rotary bearing (20) and also to a further lubricating point, wherein said radially inner bearing part (26) and said radially outer bearing part (28) are rotatable relative to one another about an axis (A) of the rotary bearing (20), and wherein said lubricant passage arrangement comprises:
- at least one first lubricant passage (30) having one end which opens in the inner peripheral surface (28a) of said radially outer bearing part (28) and another end of which is connectable with a lubricant supply,
- at least one second lubricant passage (38) which leads from the outer peripheral surface (26a) of said radially inner bearing part (26) to its inner peripheral surface (26b), and
- a ring chamber (32) formed between said inner peripheral surface (28a) of said outer bearing part (28) and said outer peripheral surface (26a) of said inner bearing part (26), said at least one first lubricant passage (30) and said at least one second lubricant passage (38) opening in said ring chamber (32);
**characterized in that** a lubricant distributing element (50) formed as a separate part is arranged in said ring chamber (32), said lubricant distributing element (50) being in a lubricant supplying connection with said at least one first lubricant passage (30); wherein in and/or on said lubricant distributing element (50) at least one first outflow path (50h) is provided for supplying lubricant to the engaging surfaces of said rotary bearing (20), and wherein in and/or on said lubricant distributing element (50) at least one second outflow path (50g) for supplying lubricant through said at least one second lubricant passage (38) to said at least one further lubricating point is provided.

2. A rotary bearing as defined in claim 1, **characterized in that** said lubricant distributing element (50) has a substantially U-shaped cross-section with two side legs (50b, 50c) and a connecting transverse web (50a).

3. A rotary bearing as defined in claim 2, **characterized in that** said transverse web (50a) has at least one supply opening (50e) through which lubricant can be supplied from said at least one first lubricant passage (30) into the inner space (50d) of said lubricant distributing element (50), which is limited by said side legs (50b, 50c) and said transverse web (50a) of the U-shape.

4. A rotary bearing as defined in any of the preceding claims,
**characterized in that** said first outflow path (50h) is formed at least in part between an outer surface (50i, 50f) of said lubricant distributing element (50) which extends substantially orthogonal to an axial direction and a counter surface (54a) of said ring chamber (32) which also extends substantially orthogonal to the axial direction.

5. A rotary bearing as defined in any of the preceding claims,
**characterized in that** said second outflow path (50g) is formed by having said at least one second lubricant passage (38) open into said inner space (50d) of said lubricant distributing element (50).

6. A rotary bearing as defined in any of the preceding claims,
**characterized in that** said lubricant distributing element (50) is secured with respect to said radially outer bearing part (28) by at least one securing element (52), preferably both in an axial direction and in a peripheral direction.

7. A rotary bearing as defined in claim 6, **characterized in that** said securing element is formed as a pipe (52) which is received in said first lubricant passage (30) and engages in a securing depression provided on an outer periphery of said lubricant distributing element (50), said securing depression having a bottom surface with a supply opening (50e) which leads to an inner space (50d) of said lubricant distributing element (50).

8. A rotary bearing as defined in any of the preceding claims,
**characterized in that** said lubricant distributing element (50) is formed as a lubricant distributing ring.

9. A rotary bearing as defined in any of the preceding claims,
**characterized in that** said radially inner bearing part (26) has two bearing part bodies (56, 58) with axial end surfaces abutting against one another.

10. A rotary bearing as defined in claim 9, **characterized in that** said both bearing part bodies (56, 58) are formed identically and arranged mirror-symmetrically.

11. A rotary bearing as defined in any of the preceding claims,
**characterized in that** a ring groove (26c) is provided on the inner peripheral surface (26b) of said radially inner bearing part (26) and extends preferably over the whole periphery.

12. A rotary bearing as defined in any of the preceding claims,
**characterized in that** the rotary bearing (20) is formed as a roller bearing which preferably comprises at least two roller body rows (22, 24) which are spaced from one another in the axial direction (A).

13. A rotary bearing as defined in claim 12, **characterized in that** the load lines (L) of said roller body rows (22, 24) include an acute angle with said axis (A), said load lines (L) of said both roller body rows (22, 24) preferably forming an O-arrangement in a section which contains said axis (A).

14. A rotary bearing as defined in claim 12 or 13, **characterized in that** the axial distance (d) of the two roller body rows (22, 24) is smaller than the diameter (D) of these roller body rows (22, 24), and is preferably less than 0.8 times, more preferably less than 0.5 times this diameter, e.g. about 0.3 times this diameter.

15. A threaded drive (10), comprising:
- a threaded spindle (16);
- a threaded nut (14) which is in threaded engagement with said threaded spindle (16); and
- a rotary bearing (20) as defined in claim 1,
said threaded nut (14) and said radially inner bearing part (26) of said rotary bearing (20) being formed as separate components which are connectable to one another during mounting of the threaded drive, and said threaded nut (14) having at least one third lubricant passage (40) formed therein which is in a lubricant supplying connection with said second lubricant passage (38).

16. A threaded drive as defined in claim 15, **characterized in that** said rotary bearing (20) is a rotary bearing as defined in any of the preceding claims.

17. A threaded drive as defined in claim 15 or 16, **characterized in that** a lubricating groove (26c) is provided in the inner peripheral surface (26b) of said radially inner bearing part (26), connected to said second lubricant passage (38), and extends substantially in a peripheral direction.

18. A threaded drive as defined in any one of claims 15 to 17,
**characterized in that** a lubricating groove (14d) is provided in the outer peripheral surface (26b) of said threaded nut (14), connected to said third lubricant passage (38), and extends substantially in a peripheral direction.

19. A threaded drive, particularly as defined in any one of claims 15 to 18, comprising:
- a spindle (16) with a spindle axis (A),
- a nut (14) which is in threaded engagement with said spindle (16),
- a rotary bearing (20), particularly as defined in any one of claims 1 to 14, with two bearing parts (26, 28) which are arranged centrally inside one another relative to said spindle axis (A), are rotatable relative to each other around said spindle axis (A) and limit a ring chamber (32) radially between them, wherein the radial inner (26) of said bearing parts (26, 28) is connected or connectable to said nut (14) in a torque proof manner, and
- a lubricant supply system (30, 50e, 50d, 50h 50g) for supplying lubricant to the bearing engaging surfaces of said two bearing parts (26, 28) as well as the threaded engaging surfaces of the spindle (16) and the nut (14), wherein at least one lubricant supply path (30, 50e, 50d) of the lubricant supply system which can be supplied with lubricant from a lubricant source leads through said radial outer (28) of said two bearing parts (26, 28) to said ring chamber (32) and branches there into at least two branch paths (50h, 50g) of which at least one (50h) leads to at least a part of said bearing engaging surfaces in the ring chamber (32) and of which at least a second one (50g) leads through said radial inner bearing part (26) to at least a part of said threaded engaging surfaces,
**characterized in that** at least one (50h) of said two branch paths (50h, 50g) includes a controllable throttling point (50i - 54a, 50f - 54a).

20. A threaded drive as defined in claim 19, **characterized in that** said throttling point (50i - 54a, 50f - 54a) is formed as a controllable blocking point which is adjustable between at least one opening position in which a flow of lubricant is permitted and a closing position in which a flow of lubricant is substantially suppressed.

21. A threaded drive as defined in claim 19 or 20, **characterized in that** the opening cross-section of said throttling point (50i - 54a, 50f - 54a) is controllable depending on the lubricant pressure in said lubricant supply path (30, 50e, 50d).

22. A threaded drive as defined in claim 21, **characterized in that** said throttling point (50i - 54a, 50f - 54a) is arranged in said first.branch path (50h) and that its opening cross-section is smaller when a lubricant pressure in said lubricant supply path (30, 50e, 50d) is greater and is greater when the lubricant pressure is smaller.

23. A threaded drive as defined in claim 22, **characterized in that** said radially outer bearing part (28) has an inner peripheral side provided with at least one ring tongue (50b, 50c) which extends in said ring chamber (32) and is flexibly deflectable, said throttling point (50i - 54a, 50f - 54a) being limited between one (50i, 50f) of side surfaces of said tongue and a throttle limiting surface (54a) formed on an outer peripheral side of said radially inner bearing part (26), said ring tongue (50b, 50c) having an opposite tongue side surface which adjoins said lubricant supply path (30, 50e, 50d).

24. A threaded drive as defined in claim 23, **characterized in that** said ring tongue is in a material connection with said outer bearing part (28) to be of one piece with the latter.

25. A threaded drive as defined in claim 23, **characterized in that** said ring tongue (50b, 50c) is formed as a component which is separate from said outer bearing part (28).

## Revendications

1. Palier tournant (20) avec un ensemble de canaux de lubrification pour amener un lubrifiant aussi bien aux surfaces de prise d'une partie de palier (26) radialement intérieure et d'une partie de palier (28) radialement extérieure du palier tournant (20) qu'à au moins un autre point de lubrification, la partie de palier (26) radialement intérieure et la partie de palier (28) radialement extérieure pouvant tourner l'une par rapport à l'autre autour d'un axe (A) du palier tournant (20), et l'ensemble de canaux de lubrification comprenant :
- au moins un premier canal de lubrification (30) dont une extrémité débouche dans la surface périphérique intérieure (28a) de la partie de palier (28) radialement extérieure et dont l'autre extrémité peut être reliée à une arrivée de lubrifiant,
- au moins un deuxième canal de lubrification (38) qui mène de la surface périphérique extérieure (26a) de la partie de palier (26) radialement intérieure à sa surface périphérique intérieure (26b), et
- un espace annulaire (32) qui est formé entre la surface périphérique intérieure (28a) de la partie de palier extérieure (28) et la surface périphérique extérieure (26a) de la partie de palier intérieure (26), l'au moins un premier canal de lubrification (30) ainsi que l'au moins un deuxième canal de lubrification (38) débouchant dans l'espace annulaire (32),
**caractérisé en ce que** dans l'espace annulaire (32) est disposé un élément de distribution de lubrifiant (50), réalisé comme composant séparé, qui est en liaison d'amenée de lubrifiant avec l'au moins un premier canal de lubrification (30), dans ou/et sur l'élément de distribution de lubrifiant (50) étant prévue au moins une première voie d'évacuation (50h) pour amener le lubrifiant aux surfaces de prise du palier tournant (20), et dans ou/et sur l'élément de distribution de lubrifiant (50) étant prévue en outre au moins une deuxième voie d'évacuation (50g) pour amener le lubrifiant au au moins un autre point de lubrification, par le au moins un deuxième canal de lubrification (38).

2. Palier tournant selon la revendication 1,
**caractérisé en ce que** l'élément de distribution de lubrifiant (50) présente une section transversale sensiblement en U avec deux branches latérales (50b, 50c) et un dos (50a) reliant celles-ci.

3. Palier tournant selon la revendication 2,
**caractérisé en ce que** dans le dos (50a) est prévu au moins un orifice d'amenée (50e) par lequel le lubrifiant peut être amené depuis l'au moins un premier canal de lubrification (30) dans le volume intérieur (50d), délimité par le dos (50a) et les deux branches latérales (50b, 50c) de la forme en U, de l'élément de distribution de lubrifiant (50).

4. Palier tournant selon l'une des revendications précédentes,
**caractérisé en ce que** la première voie d'évacuation (50h) est réalisée au moins en partie entre une surface extérieure (50i, 50f) s'étendant sensiblement orthogonalement à la direction axiale, de l'élément de distribution de lubrifiant (50), et une contre-surface (54a), s'étendant également sensiblement orthogonalement à la direction axiale, de l'espace annulaire (32).

5. Palier tournant selon l'une des revendications précédentes,
**caractérisé en ce que** la deuxième voie d'évacuation (50g) est formée par le fait que l'au moins un deuxième canal de lubrification (38) débouche dans le volume intérieur (50d) de l'élément de distribution de lubrifiant (50).

6. Palier tournant selon l'une des revendications précédentes,
**caractérisé en ce que** l'élément de distribution de lubrifiant (50) est fixé au moyen d'au moins un élément de blocage (52), par rapport à la partie de palier (28) radialement extérieure, et ce de préférence aussi bien dans la direction axiale (A) que dans la direction périphérique.

7. Palier tournant selon la revendication 6,
**caractérisé en ce que** l'élément de blocage est formé par un tube (52) qui est inséré dans le premier canal de lubrification (30) et s'engage dans un renfoncement de blocage prévu sur le pourtour extérieur de l'élément de distribution de lubrifiant (50), dont la surface de fond présente un orifice d'amenée (50e) menant vers un volume intérieur (50d) de l'élément de distribution de lubrifiant (50).

8. Palier tournant selon l'une des revendications précédentes,
**caractérisé en ce que** l'élément de distribution de lubrifiant (50) est réalisé comme anneau de distribution de lubrifiant.

9. Palier tournant selon l'une des revendications précédentes,
**caractérisé en ce que** la partie de palier (26) radialement intérieure comprend deux corps de partie de palier (56, 58) qui s'appliquent l'un contre l'autre par des surfaces frontales axiales.

10. Palier tournant selon la revendication 9,
**caractérisé en ce que** les deux corps de partie de palier (56, 58) sont réalisés de manière identique et disposés dans une symétrie en miroir.

11. Palier tournant selon l'une des revendications précédentes,
**caractérisé en ce que** sur la surface périphérique intérieure (26b) de la partie de palier (26) radialement intérieure est prévue une rainure annulaire (26c) s'étendant de préférence sensiblement sur tout le pourtour.

12. Palier tournant selon l'une des revendications précédentes,
**caractérisé en ce que** le palier tournant (20) est un palier de roulement qui comporte de préférence au moins deux rangées (22, 24) de corps de roulement espacées l'une de l'autre dans la direction axiale (A).

13. Palier tournant selon la revendication 12,
**caractérisé en ce que** les lignes de charge (L) des deux rangées de corps de roulement (22, 24) forment avec l'axe (A) un angle oblique, les lignes de charge (L) des deux rangées de corps de roulement (22, 24) formant de préférence une disposition en O dans une coupe contenant l'axe (A).

14. Palier tournant selon la revendication 12 ou 13,
**caractérisé en ce que** l'écartement axial (d) des deux rangées de corps de roulement (22, 24) est inférieur au diamètre (D) de ces rangées de corps de roulement (22, 24), de préférence inférieur à 0,8 fois, de préférence encore inférieur à 0,5 fois ce diamètre, par exemple égal à 0,3 fois ce diamètre.

15. Mécanisme à vis (10) comportant
- une broche filetée (16),
- un écrou taraudé (14) en engagement fileté avec la broche filetée (16), et
- un palier tournant (20) selon la revendication 1,
l'écrou taraudé (14) et la partie de palier (26) radialement intérieure du palier tournant (20) étant conçus à la manière de composants séparés l'un de l'autre, qui lors du montage du mécanisme à vis peuvent être fixés l'un sur l'autre, et
dans l'écrou taraudé (14) étant réalisé au moins un troisième canal de lubrification (40) qui est en liaison d'alimentation du lubrifiant avec le deuxième canal de lubrification (38).

16. Mécanisme à vis selon la revendication 15,
**caractérisé en ce que** le palier tournant (20) est un palier tournant selon l'une des revendications précédentes.

17. Mécanisme à vis selon la revendication 15 ou 16,
**caractérisé en ce que** dans la surface périphérique intérieure (26b) de la partie de palier (26) radialement intérieure il est prévu, à la suite du deuxième canal de lubrification (38), une rainure de lubrification (26c) s'étendant sensiblement dans la direction périphérique.

18. Mécanisme à vis selon l'une des revendications 15 à 17,
**caractérisé en ce que** dans la surface périphérique extérieure de l'écrou taraudé (14), il est prévu, à la suite du troisième canal de lubrification (38), une rainure de lubrification (14d) s'étendant sensiblement dans la direction périphérique.

19. Mécanisme à vis, en particulier selon l'une des revendications 15 à 18, comprenant
- une broche (16) avec un axe de broche (A),
- un écrou (14) en engagement fileté avec la broche (16),
- un palier tournant (20), en particulier selon l'une des revendications 1 à 14, avec deux parties de palier (26, 28) disposées centrées l'une dans l'autre par rapport à l'axe de broche (A), pouvant tourner l'une par rapport à l'autre autour de l'axe de broche (A) et délimitant radialement entre elles un espace annulaire (32), dont la partie de palier (26) radialement intérieure est reliée ou peut être reliée solidairement en rotation à l'écrou (14), et
- un système d'alimentation de lubrifiant (30, 50e, 50d, 50h, 50g) pour l'alimentation en lubrifiant des surfaces de prise des deux parties de palier (26, 28) ainsi que les surfaces d'engagement filetées de la broche (16) et de l'écrou (14), au moins une voie d'amenée de lubrifiant (30, 50e, 50d), pouvant être alimentée en lubrifiant à partir d'une source de lubrifiant, du système d'alimentation de lubrifiant, menant par la partie de palier (28) radialement extérieure des deux parties de palier (26, 28), à l'espace annulaire (32), et se ramifiant à cet endroit en au moins deux voies de ramification (50h, 50g) dont au moins une première voie (50h) dans l'espace annulaire (32) mène à au moins une partie des surfaces de prise des paliers et dont au moins une deuxième voie (50g) mène, par la partie de palier (26) radialement intérieure, à au moins une partie des surfaces d'engagement filetées,
**caractérisé en ce qu'**au moins l'une (50h) des deux voies de ramification (50h, 50g) contient un point d'étranglement (50i-54a, 50f-54a) pouvant être commandé.

20. Mécanisme à vis selon la revendication 19,
**caractérisé en ce que** le point d'étranglement (54i-54a, 50f-54a) est conçu à la manière d'un point de fermeture pouvant être commandé, qui est réglable entre au moins une position d'ouverture, dans laquelle il autorise le passage du lubrifiant, et une position de fermeture dans laquelle le passage du lubrifiant est essentiellement interdit.

21. Mécanisme à vis selon la revendication 19 ou 20,
**caractérisé en ce que** la section d'ouverture du point d'étranglement (50i-54a, 50f-54a) peut être commandée en fonction de la pression du lubrifiant dans la voie d'amenée de lubrifiant (30, 50e, 50d).

22. Mécanisme à vis selon la revendication 21,
**caractérisé en ce que** le point d'étranglement (50i-54a, 50f-54a) est disposé dans la première voie de ramification (50h), et sa section d'ouverture est plus petite en cas de pression supérieure du lubrifiant dans la voie d'amenée de lubrifiant (30, 50e, 50d), et plus grande dans le cas d'une pression de lubrifiant plus basse.

23. Mécanisme à vis selon la revendication 22,
**caractérisé en ce que** la partie de palier (28) radialement extérieure porte sur le côté périphérique intérieur au moins une languette annulaire (50b, 50c), pouvant être déviée de manière flexible et pénétrant dans l'espace annulaire (32), le point d'étranglement (50i-54a, 50f-54a) étant limité entre l'une (50i, 50f) des surfaces latérales de la languette et une surface de limitation d'étranglement (54a) formée sur le côté périphérique extérieur de la partie de palier (26) radialement intérieure, et la languette annulaire (50b, 50c) étant adjacente par ses surfaces latérales opposées à la voie d'amenée de lubrifiant (30, 50e, 50d).

24. Mécanisme à vis selon la revendication 23,
**caractérisé en ce que** la languette annulaire est fabriquée dans la même matière que la partie de palier extérieure (28).

25. Mécanisme à vis selon la revendication 23,
**caractérisé en ce que** la languette annulaire (50b ; 50c) est fabriquée séparément de la partie de palier extérieure (28).
